# EUROPEAN PATENT SPECIFICATION

(11) **EP 3 768 133 B1**
(45) Date of publication and mention of the grant of the patent: **15.12.2021**
(21) Application number: 19721162.6
(22) Date of filing: 25.03.2019
(51) Int. Cl.: A47J 43/12, A23C 9/152, B65D 83/74

(54) **DISPENSER FOR A COMBINATION OF MILK FOAM AND AERATED MILK FOR USE AS ADDITION TO COFFEE PRODUCTS**
SPENDER FÜR EINE KOMBINATION AUS MILCHSCHAUM UND MIT LUFT DURCHSETZTER MILCH ZUR VERWENDUNG ALS ZUSATZ ZU KAFFEEPRODUKTEN
DISTRIBUTEUR DE MÉLANGE DE MOUSSE DE LAIT ET DE LAIT AÉRÉ DESTINÉE À ÊTRE AJOUTÉE À DES PRODUITS À BASE DE CAFÉ

(30) Priority: 23.03.2018 NL 2020657
(43) Date of publication of application: 27.01.2021
(73) Proprietor: Dees, Marco Pieter Daniël, 2903 PE CAPELLE AAN DEN IJSSEL (NL)
(72) Inventor: Dees, Marco Pieter Daniël, 2903 PE CAPELLE AAN DEN IJSSEL (NL)
(74) Representative: EP&C
(86) International application number: PCT/NL2019/050185
(87) International publication number: WO 2019/182451

(56) References cited:
- EP-A1- 1 099 384
- EP-A2- 1 609 742
- US-A1- 2004 076 730
- US-A1- 2016 324 176
- US-A1- 2017 166 391
- US-B1- 6 267 110

## Description

### Technical field

The present invention relates to field of devices for dispensing a heated (or warm) combination of foam and aerated liquid, e.g. milk foam or frothed milk and aerated milk, particularly for addition to cappuccino or latte coffee products.

### Background of the invention

Cappuccino and latte coffee products are beverages wherein (espresso) coffee is topped with a heated (or warm) combination of milk foam or frothed milk and aerated liquid milk or vice versa. In current devices for making cappuccino and latte coffee products, milk is mixed with steam, or mechanically agitated and heated, to heat the product and provide a foam or froth and aerated liquid mixture that is subsequently added to a cup containing coffee or vice versa.

However, it can be very time consuming for the user to make cappuccino or latte coffee products. The current devices are often complex in construction and/or laborious to clean. Subsequently, the risk of not cleaning the available systems can result in bacteria growth creating a possible health hazard. In addition, the equipment is not always suitable for home use or usage in situation with a low product turnaround, leading to the risk of decay of the product, possibly resulting in health risks.

Moreover, current devices are typically not suitable for mobile use, such as on the go, and/or require electricity. Also the foaming or frothing of the end result often leaves something to be desired.

A device of the prior art is known from US-A-2016/324176. Document US-A-2004/076730 discloses a process for creating milk foam.

It is an objective of the present disclosure to solve one or more of the above-mentioned problems.

### Description of the invention

The present disclosure provides for a disposable container for dispensing a heated (or warm) combination of foam and aerated liquid, e.g. milk foam or frothed milk and aerated milk, which can be added to coffee products, for example cappuccino or latte coffee products.

In a first aspect, the present disclosure relates to a container for dispensing a heated product comprising 40-60 vol.% milk foam and 40-60 vol.% aerated milk, the container comprising
a first chamber containing milk having a fat content of between 3 and 6 wt.%, preferably 4-5 wt.%;
a self-heating element which is in thermal contact with the milk and which upon activation heats the milk to a temperature of between 58 and 70 degrees Celsius, preferably 60-68 degrees Celsius;
above 1 bar pressurized gas which is contained in the first chamber or in a second chamber allowing release of the pressurized gas to the first chamber; and
an outlet valve which is in liquid communication with the first chamber,
wherein preferably the volume ratio between pressurized gas and milk in the container is between 0.3 : 1 and 1 : 0.3.

The container is preferably agitated until a temperature of between 25-40, more preferably 30-35 degrees Celsius, as explained in more detail later herein.

The container is particularly designed to froth, aerate and heat the product resulting in transformed proteins forming the structure of the bubbles. The fatty liquid (milk) encapsulated in and around this bubble structure provides a silky and smooth texture and taste.

It was found that the container according to the present disclosure can be used as a (disposable) dispenser of the heated product (such as between 58-70 degrees Celsius), for example to prepare cappuccino or latte coffee products, without requiring an external (i.e. not comprised in the container) source of power, electricity, hot water or steam.

It is also an option to combine the container with a (dedicated) external heater, i.e. a heater which is separate from the container but which can be placed in thermal contact with the foamable liquid. In view thereof, the container may not comprise the self-heating element. The container is preferably agitated until a temperature of between 25-40, more preferably 30-35 degrees Celsius, as explained in more detail later herein.

A particular advantage of the present container is that there is no requirement to clean the present container, because it can be easily disposed of. In view thereof, the container is preferably made of recyclable materials. On top of that, an extremely high quality product can be obtained very easily, allowing consumers to enjoy high quality coffee products, e.g. cappuccino, on the go, for example in situations where no source of electricity is available.

The first chamber can be a compartment of the container which comprises a foamable liquid and preferably a free space containing a pressurized gas. The pressurized gas may also be contained in a different compartment, i.e. a second chamber, for example a gas cartridge.

The container may have a size and/or volume of for example 25-1000 ml, preferably between 50-700 ml or 50-500 ml. Alternatively and/or additionally, the container may comprise between 10-500 ml liquid, more preferably 20-250 ml or 30-100 ml liquid (as measured when the liquid is not yet foamed). Preferably, the ratio between the pressurized gas and milk in the first chamber is between 0.1:1 and 1:0.1, preferably between 0.2:1 and 1:0.2, more preferably between 0.3:1 and 1:0.3, even more preferably between 0.4:1 and 1:0.4, most preferably between 0.5:1 and 1:0.5, or 0.7-1.0 : 0.7-1.0, 0.8-1.2 : 0.8-1.2, 0.9-1.1 : 0.9-1.1 (as measured when the milk is not yet foamed). For example, the pressurized gas to liquid volume ratio may be between 40 to 60% liquid and between 60 to 40% pressurized gas in particular for Cappucino foam cans and/or between 50 to 70% liquid and between 50 to 30% pressurized gas in particular for latte cans.

The pressurized gas preferably is air, nitrogen, and/or carbon dioxide. The pressurized gas may be pressurized above atmospheric pressure, preferably above 1, 1.2, 1.4, 1.6, 1.8, 2, 3, 4, 5, 6, 7, 8, 9, or 10 bar and/or at most 3, 4, 5, 6, 7, 8, 9, 10 bar.

The container and/or the outlet valve can thus be used for dispensing the product including (micro)foam, preferably milk (micro)foam. Within the present disclosure, the term "outlet valve" means a component that allows the foam to be dispensed to pass through an opening, preferably (only) upon actuation by the user. The outlet valve may comprise or be a nozzle, preferably a nozzle e.g. configured to enhance the frothing of the liquid as it exits the first chamber.

The present disclosure also provides that the outlet valve may comprise a nozzle having the following characteristics:
- at least one opening with a diameter of between 0.1 ― 0.4 mm;
- wherein the nozzle provides for a pressure reduction such that the product gently leaves the container upon actuation of the nozzle; and/or
- wherein the nozzle is configured to allow intact passage of foam bubbles, preferably at least 50, 70, or 90% of the bubbles can pass through the nozzle intact during use.

In a particularly preferred embodiment, the foamable liquid is milk, preferably dairy milk or plant based milk, which may be fresh but it is preferred to use pasteurized and/or sterilized dairy milk. In this regard, the term "foamable" means that the liquid can be used as a basis to produce (micro)foam, i.e. a substance formed by trapping pockets of gas in the liquid, typically by mixing the liquid with a gas and/or directing the liquid through a nozzle.

Dairy milk in this context generally refers to animal milk such as but not limited to cow milk, camel milk, and/or goat milk. Plant based milk can be for example but not limited to soymilk, and/or almond milk.

In particular, the milk can be for example :
Animal milk products such as but not limited to cow milk, camel milk, and/or goat milk.
Plant based milk products such as but not limited to soymilk, and/or almond milk.
The milk can be pre-treated by a pasteurising or sterilising process, or fresh product can be used. Pre-treated product can be stored outside the fridge and has a longer shelf-life than fresh product that has to be stored at chilled temperatures.

In the present disclosure, it is preferred that the milk has a fat content of at least 3, 4 wt.% and/or at most 5, 6 wt.% with respect to the weight of the milk, and/or that the milk contains at most 5, 4, 3, 2, 1, or preferably 0 wt.% additives that are not naturally present in said milk with respect to the weight of the milk. Additives generally give additional and unwanted flavours which can be avoided with the present disclosure.

The milk preferably has a protein content of of at least 1, 2, 2.5, 3, 4, 5 wt.% and/or at most 3, 4, 5, 6, 7, 8 wt.% with respect to the weight of the milk.

Various self-heating elements can be applied in the present container, for example a self-heating element which comprises a composition which is able to provide an exothermic chemical reaction upon activation of the self-heating element. This in turn will lead to the heating up of the foamable liquid, wherein preferably the composition is physically separated from the foamable liquid.

Alternatively and/or additionally, the self heating element may comprise a solid state thermite reaction composition, preferably wherein an activator mechanism is in communication with the solid state thermite reaction composition so as to heat up the foamable liquid heats upon actuation of the activator mechanism, wherein preferably the solid state thermite reaction composition is physically separated from the foamable liquid. For example, a solid state thermite reaction composition as described in US2010/0252022 may be used.

The solid state thermite reaction composition preferably comprises
a fuel component, preferably flaked aluminum powder, such as between about 10 and 25 percent by weight of the composition;
an initiating oxidizer, preferably potassium chlorate, such as between about 5 and 20 percent by weight of the composition;
a primary oxidizer, preferably comprising a dense form oxidizer (i.e. silicon dioxide) and a high surface area oxidizer (i.e. fumed silica), such as between about 5 and 40 percent by weight of the composition;
a fluxing agent, preferably calcium fluoride, such as between 5 and 20 percent by weight of the composition;
a thermal diluent, preferably bentonite nanoclay, such as between 20 and 50 percent by weight of the composition; and/or
a high energy oxidizer, preferably iron (III) oxide, such as between about 0 and 20 percent by weight of the composition.

It was found that the use of a solid state thermite reaction composition as the self-heating element provides for a heating profile that surprisingly improves milk protein characteristics in favour of foam stability, in comparison to other heating means.

Alternatively and/or additionally the self heating element may comprise a composition comprising calcium oxide (also referred to as quicklime), preferably wherein composition comprising calcium oxide is mixed with water upon actuation of an activator mechanism , wherein preferably the composition comprising calcium oxide is physically separated from the foamable liquid.

Preferably, the self-heating element according to the present disclosure is configured to heat up the foamable liquid (or milk) contained in the first chamber to a temperature of between 58-70 degrees Celsius, preferably between 60-68, or between 62-66 degrees Celsius.

Preferably, the container comprises an indicator that indicates when the milk contained in the first chamber has a temperature above 30, or above 35 degrees Celsius. This allows the user to agitate the container until such temperature is reached, and not to agitate the container after said temperature is reached, thereby improving the quality of the end product and thereby not damaging the protein supported outer shell of the bubbles.

In view of the above, it will be clear that the container is preferably made of (heatconductive) material, such as comprising at least 25, 30, 40, 40, 50, 60, 70, 80, or 90 wt. % aluminium, steel or other metal, or PET (polyethylene terephthalate) or other plastic, with respect to the weight of the container.

Alternatively and/or additionally, the container according to the present disclosure is made of material of which at least 25, 30, 40, 40, 50, 60, 70, 80 wt. % is recyclable, with respect to the weight of the container.

In a particularly preferred embodiment, the container according to the present disclosure comprises an outer sleeve that surrounds the container, preferably to insulate the user's hands from the hot foamable liquid. This sleeve, just as the rest of the container, is preferably made out of recycled or recyclable material, for example comprising at least 40, 50, 60, 80, 90 wt.% paper and/or carton.

An important advantage of the present container is that it does not comprise electrically operated components nor components configured to be connected to an external source of power, electricity, hot water, and/or steam. The container can work as a stand-alone device, and can produce hot milk foam and aerated milk at any place and time.

The temperature and pressure combination in relation to the amount of milk in the packaging allows to differentiate between different products to be dispensed by using the technology of the present disclosure.

Specifically, the pressurized gas to liquid volume ratio may be between 40 to 60 liquid and between 60 to 40% pressurized gas to produce Cappuccino milk foam product and between 50 to 70% liquid and between 50 to 30% pressurized gas to produce latte milk foam product. The present disclosure may produce a product comprising at least 30, 40, 50, 60, 70, 80, 90, 95 vol.% (micro)foam and/or between 30-90, 30-80, 40-70 vol.% (micro) foam, preferably between 40-60 vol.% (micro)foam, most preferably between 45-55 vol.% (micro)foam; and/or at most 10, 20, 30, 40, 50, 60, 70 vol.% aerated milk, preferably between 30-90, 30-80, 40-70 vol.% aerated milk, preferably between 40-60 vol.% aerated milk, most preferably between 45-55 vol.% aerated milk.

In an example, the container comprises between 40 and 80 ml or between 50 and 70 ml milk in the first chamber, preferably with a fat content of between 3 and 6 wt.%. This can be frothed and heated to result in approximately 60 ml of aerated milk and 60 ml of microfoam.

In this embodiment, the container may for example have pressurized gas in the first compartment of at least 5, 10, 20, 30, 40 or 50 ml and/or at most 100, 90, 80, 70, 60 ml. Further, the heater is preferably configured such that a temperature of between 58 and 70 degrees Celsius is reached upon activation of the heater, more preferably between 60 and 68 or between 62 and 66 degrees Celsius.

This particularly enables the fats to dissolve, the proteins to stabilise and the lactose to produce the sweet tasting warm milk flavour, e.g. for making cappuccino.

In another example, the container can will contain a higher quantity milk, e.g. between 70-130 ml or between 80-120 or 90-110 ml milk, preferably with a fat content of between 3 and 6 wt.%. In this embodiment, the container may for example have pressurized gas in the first compartment of at least 1, 5, 10, 20, 30 or 40 ml and/or at most 90, 80, 70, 60, 50 ml. Further, the heater is preferably configured such that a temperature of between 58 and 70 degrees Celsius is reached upon activation of the heater, more preferably between 60 and 68 or between 62 and 66 degrees Celsius. This particularly allows for preparing e.g. latte products.

Additionally and/or alternatively, the present container may comprise between 30 -100, preferably 40-80 or 50-70 ml milk, or between 90-150, preferably 100-140 or 110-130 ml milk.

The art of making the perfect foamed / frothed and aerated milk combination product is concerned with achieving an ideal combination of aerated milk and milk foam. The foam part comprises micro size bubbles of air. The amount of fat and protein in combination with a specific temperature are the key elements in achieving the perfect micro foam. The protein adheres to/ solidifies / settles on the bubble wall, forming the "construction" of the foam bubbles and acting as the stabiliser. The smaller the bubbles, the better the fatty milk part of the liquid stays entrapped in the "bubble matrix". The fat makes the micro foam compact and creamy, providing the desired "mouth feel".

The temperature of the milk foam is important. The temperature range between 58 and 70 degrees Celsius may allow to provide the fats and protein to form the perfect "mouth feel" and the lactose to create the sweet "cooked milk taste". If the temperature is too low, the fat and protein is not able to form and stabilise the micro foam plus, adding a large milk component to the hot coffee may cause the end product to be at a too low temperature. Therefore, the preferred bottom desired temperature is 58 degrees Celsius. A too low temperature causes that the proteins will not adhere nor solidify and thus not support the bubble wall. If the temperature is too high, the milk will undergo chemical reactions that influences taste and texture negatively, causing an inferior product. Therefore, the maximum desired temperature is 70 degrees Celsius. The top temperature may be adjusted if the milk product can be treated to not have the negative taste and structure reactions at higher temperatures.

The micro size of the bubbles slows down the "drainage" effect in which the fatty milk drains out of the "bubble matrix". The drainage effect describes the effect of the liquid milk separating from the foam, thereby making the foam "firm/hard" and less creamy.

In a second aspect, the present disclosure provides for a method for preparing a heated product comprising 40-60 vol.% milk foam and 40-60 vol.% aerated milk, wherein the method comprises
(a) providing a container comprising
   a first chamber containing milk having a fat content of between 3 and 6 wt.%; above 1 bar pressurized gas which is contained in the first chamber or in a second chamber allowing release of the pressurized gas to the first chamber; and
   an outlet valve which is in liquid communication with the first chamber,
   wherein the volume ratio between pressurized gas and milk in the container is between 0.3 : 1 and 1 : 0.3;
(b) heating the milk contained in the first chamber to a temperature of between 58 and 70 degrees Celsius (preferably 60-68 degrees Celsius) , preferably by combining the container with an external heater which can be placed in thermal contact with the milk;
(c) shaking and/or agitating said container, preferably during the heating of step (b) until the milk reaches a temperature of between 25-40, preferably between 30-35 degrees Celsius;
(d) activating and/or opening the outlet valve so as to produce the heated product which is optionally subsequently added to espresso, coffee, or hot chocolate.

For example, an external heater and/or agitator, preferably a combination thereof, may be used that is specifically designed such that a container according to the present disclosure fits therein or on. Said external heater may be stand-alone or part of a coffee machine. Although not preferred, a microwave or heated water may be used as the external heater.

However, a microwave or heated water are not suited to control the exact temperature range and cannot agitate the milk, resulting in a product that is not as desired in texture and taste. In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

### Brief description of the figure

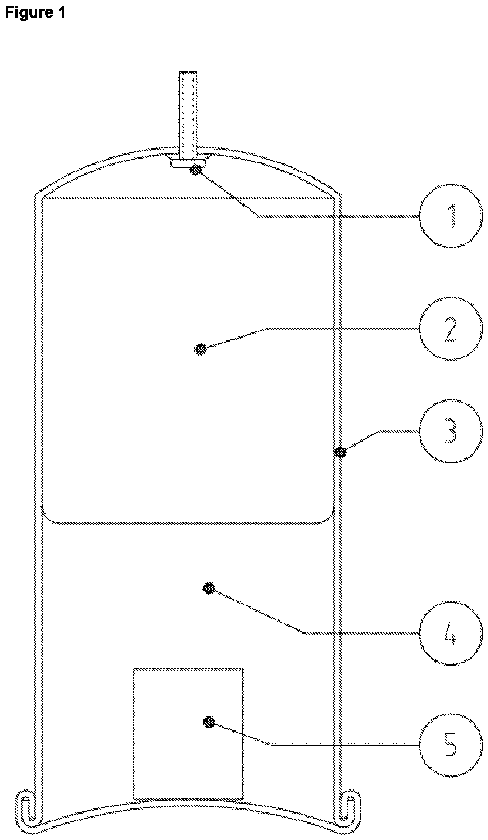

Figure 1: Container according to an embodiment of the present disclosure with (1) nozzle; (2) open space; (3) can; (4) milk; and (5) self heating element.

### Example 1

Dispenser for heated product comprising 40-60 vol. % milk foam and 40-60 vol. % aerated milk

A pressurised canister is provided. The canister contains pure milk with no additives. The milk is stored in the canister under pressure. The canister also contains a Self-Heating Element (SHE) known as used in Self Heating Food Packaging (SHFP) and Ready To Drink packaging (RTD). Technologies that can be used are for instance but not limited to Thermite solid state or quicklime technologies.

Upon activation of the SHE the milk is heated, first to a temperature between 30-35, preferably 35 degrees Celsius (as indicated by a temperature indicator, and while the container is agitated e.g. by shaking), and then to a temperature between 58 and 70 degrees Celsius (while the container is not agitated).

The rise in temperature will also cause an additional rise in pressure.

At the optimum temperature, the milk can be dispensed through the nozzle on top of the cannister.

The temperature and pressure, as well as the amount of milk in the canister, in other words also the available open space in the canister, can be suitably adapted to result in a liquid aerated milk and microfoam combination product which is desirable for making cappuccino's and latte coffee products.

The temperature and pressure combination in relation to the amount of milk in the packaging allows to differentiate between the two separate products to be dispensed by using the technology.

The milk can be for example :
Animal milk products such as but not limited to cow milk, camel milk, and/or goat milk.
Plant based milk products such as but not limited to soymilk, and/or almond milk.
The milk can be pre-treated by a pasteurising or sterilising process, or fresh product can be used. Pre-treated product can be stored outside the fridge and has a longer shelf-life than fresh product that has to be stored at chilled temperatures.

### Example 2

500 test containers according to the present disclosure but with different characteristics were tested for foam stability and foam creaminess. In the Table 1 below, the results of 12 test containers, which are representative of the test results, are shown:

**Table 1**

| **CHARACTERISTICS OF 12 TEST CONTAINERS** | | | | | | **Foam stability** | **Foam creaminess** |
|---|---|---|---|---|---|---|---|
| | ***Milk temperature (°C)*** | ***Gas pressure (bar)*** | ***Milk* - *fat content (wt.%)*** | ***Volume ratio free space to milk*** | ***Milk type*** | | |
| 1 | 50 | 2.2 | 4.3 | 20:80 | Pasteurized milk | **4.2** | **4.1** |
| 2 | 53 | 2.3 | 4.4 | 25:75 | Pasteurized milk | **5.6** | **5.3** |
| 3 | 62 | 2.4 | 2.0 | 40:60 | Pasteurized milk | **7.1** | **4.1** |
| 4 | 63 | 2.5 | 4.5 | 50:50 | Pasteurized milk | **9.5 ("cappuccino foam")** | **9.6** |
| 5 | 64 | 3.0 | 7.0 | 40:60 | Plantbased milk | **7.1** | **9.2** |
| 6 | 65 | 3.5 | 4.2 | 75:25 | Pasteurized milk | **8.4** | **8.3** |
| 7 | 66 | 2.4 | 4.1 | 40:60 | Plantbased milk | **9.1 ("latte foam")** | **9.4** |
| 8 | 74 | 2.6 | 4.3 | 60:40 | Pasteurized milk | **4.6** | **4.2** |
| 9 | 80 | 2.5 | 4.2 | 50:50 | Pasteurized milk | **4.1** | **4.1** |
| 10 | 64 (but heated after foam creation/ after agitation | 2.5 | 4.2 | 50:50 | Pasteurized milk | **4.3** | **5.6** |
| 11 | 63 (but heated by means of microwave instead of self heating element) | 2.5 | 4.2 | 50:50 | Pasteurized milk | **5.1** | **4.9** |
| 12 | 64 (but heated by means of hot water bath instead of self heating element) | 2.5 | 4.2 | 50:50 | Pasteurized milk | **5.7** | **5.8** |

The foam produced by the 500 different test containers was assessed on a scale from 1-10 for foam stability and foam creaminess by a test panel of 6 randomly selected visitors of a coffee bar. Scores awarded by the participants were averaged.

It was found that the milk product is preferably heated first to about 35 °C while shaking and then until between 58 and 70 °C. It is believed that in this temperature range an optimal sweet taste is achieved. Preferably the temperature should not exceed 70 °C as this will result in a suboptimum protein structure and inferior taste of the foam. At a temperature below 58 °C, the proteins will not solidify in order to form the support for the wall of the bubbles, resulting in an unstable foam and the lactose does not create the particular cooked milk taste below this temperature.

As can be seen, the fat content of the milk is preferably between 3 and 6 wt.%. It appears that this particular range leads to a smooth and velvety foam layer. A lower fat content will result in larger bubbles without the creamyness, also known as a "hard" or "Dry" foam. A higher fat content will result in a too heavy foam, resulting in a collapsing foam layer.

The fatty liquid is entrapped between the bubbles and creates the smooth velvetty taste and mouth feeling.

Two test containers scored above 9 for both foam stability and foam creaminess. The first of the two was assessed to be particularly suitable as cappuccino foam, whereas the second was considered best suitable as latte foam. It appears that the void-space (pressurized gas volume) to liquid volume ratio may be between 40 to 60 liquid and between 60 to 40% void space to produce Cappucino foam and between 50 to 70% liquid and between 50 to 30% void-space to produce latte foam.

The combination between the right liquid to void-space ratio, fat content, pressure and heating and agitating procedure all contribute to the realization of the perfect microfoam result and the correct chemical reactions resulting in the so desired "Cooked milk / sweet taste".

## Claims

1. Container (3) for dispensing a heated product comprising 40-60 vol.% milk foam and 40-60 vol.% aerated milk, the container comprising
a first chamber (4) containing milk having a fat content of between 3 and 6 wt.%;
a self-heating element (5) which is in thermal contact with the milk and which upon activation heats the milk to a temperature of between 58 and 70 degrees Celsius;
above 1 bar pressurized gas which is contained in the first chamber or in a second chamber allowing release of the pressurized gas to the first chamber; and
an outlet valve (1) which is in liquid communication with the first chamber, wherein the volume ratio between pressurized gas and milk in the container is between 0.3 : 1 and 1 : 0.3.

2. Container according to claim 1, wherein the heated product comprising 40-60 vol.% milk foam and 40-60 vol.% aerated milk is for addition to coffee, in particular cappuccino or latte coffee products.

3. Container according to any one of the previous claims, wherein the milk contained in the first chamber is dairy milk or plant based milk, more preferably pasteurized and/or sterilized dairy or plant based milk.

4. Container according to any one of the previous claims, wherein the milk contained in the first chamber has a fat content of at least 4, or at least 5 wt.% with respect to the weight of the milk.

5. Container according to any one of the previous claims, wherein the milk contained in the first chamber comprises at most 5, 4, 3, 2, 1 wt.%, or preferably 0 wt.% additives that are not naturally present in said milk with respect to the weight of the milk.

6. Container according to any one of the previous claims, wherein the container comprises an indicator that indicates when the milk contained in the first chamber has a temperature above 30, or above 35 degrees Celsius.

7. Container according to any one of the previous claims, wherein the milk contained in the first chamber has a protein content of between 1-6 wt.%, preferably between 2-5 wt.%.

8. Container according to any one of the previous claims, wherein the self-heating element comprises
- a composition which is able to provide an exothermic chemical reaction upon activation of the self-heating element so as to heat up the milk contained in the first chamber, wherein preferably the composition is physically separated from the milk contained in the first chamber;
- a solid state thermite reaction composition, preferably wherein an activator mechanism is in communication with the solid state thermite reaction composition so as to heat up the milk contained in the first chamber upon actuation of the activator mechanism, wherein preferably the solid state thermite reaction composition is physically separated from the milk contained in the first chamber; and/or
- a composition comprising calcium oxide, preferably wherein composition comprising calcium oxide is mixed with water upon actuation of an activator mechanism, wherein preferably the composition comprising calcium oxide is physically separated from the milk contained in the first chamber.

9. Container according to any one of the previous claims, wherein the container is made of material comprising at least 25, 30, 40, 40, 50, 60, 70, 80, or 90 wt. % aluminium, steel or other metal, or PET (polyethylene terephthalate) or other plastic, with respect to the weight of the container.

10. Container according to any one of the previous claims, wherein the container is made of material of which at least 25, 30, 40, 40, 50, 60, 70, 80 wt. % is recyclable, with respect to the weight of the container.

11. Container according to any one of the previous claims, wherein the container comprises an outer sleeve to thermally insulate the user's hands from the foamable liquid.

12. Container according to any one of the previous claims, wherein the pressurized gas is air, nitrogen, and/or carbon dioxide; and/or wherein the pressurized gas is pressurized above atmospheric pressure, preferably above 2, 3, 4, 5, 6, 7, 8, 9, or 10 bar.

13. Container according to any one of the previous claims, wherein the container does not comprise electrically operated components and/or wherein the container does not comprise components configured to be connected to an external source of energy, electricity, hot water, and/or steam.

14. Method for preparing a heated product comprising 40-60 vol.% milk foam and 40-60 vol.% aerated milk, wherein the method comprises
(a) providing a container comprising
a first chamber containing milk having a fat content of between 3 and 6 wt.%;
above 1 bar pressurized gas which is contained in the first chamber or in a second chamber allowing release of the pressurized gas to the first chamber; and
an outlet valve which is in liquid communication with the first chamber,
wherein the volume ratio between pressurized gas and milk in the container is between 0.3 : 1 and 1 : 0.3;
(b) heating the milk contained in the first chamber to a temperature of between 58 and 70 degrees Celsius, preferably by combining the container with an external heater which can be placed in thermal contact with the milk;
(c) shaking and/or agitating said container, preferably during the heating of step (b) until the milk reaches a temperature of between 25-40, preferably between 30-35 degrees Celsius;
(d) activating and/or opening the outlet valve so as to produce the heated product comprising 40-60 vol.% milk foam and 40-60 vol.% aerated milk which is optionally subsequently added to espresso, coffee, or hot chocolate.

## Patentansprüche

1. Behälter (3) zum Abgeben eines erwärmten Produkts, das 40 ― 60 Vol.-% Milchschaum und 40 ― 60 Vol.-% mit Luft durchsetzte Milch umfasst, wobei der Behälter Folgendes umfasst:
eine erste Kammer (4), die Milch enthält, die einen Fettgehalt von zwischen 3 und 6 Gew.-% aufweist,
ein selbsterwärmendes Element (5), das in Wärmekontakt mit der Milch steht und nach Aktivierung die Milch auf eine Temperatur von zwischen 58 und 70 Grad Celsius erwärmt; ein über 1 bar hinaus druckbeaufschlagtes Gas, das in der ersten Kammer oder in einer zweiten Kammer enthalten ist, wobei Freigeben des druckbeaufschlagten Gases an die erste Kammer zugelassen ist; und
ein Auslassventil (1), das in Flüssigkeitskommunikation mit der ersten Kammer steht,
wobei das Volumenverhältnis zwischen druckbeaufschlagtem Gas und Milch in dem Behälter zwischen 0,3:1 und 1:0,3 beträgt.

2. Behälter nach Anspruch 1, wobei das erwärmte Produkt, das 40 ― 60 Vol.-% Milchschaum und 40 ― 60 Vol.-% mit Luft durchsetzte Milch umfasst, als Zusatz zu Kaffee, insbesondere von Cappuccino- oder Milch-Kaffee-Produkten dient.

3. Behälter nach einem der vorstehenden Ansprüche, wobei die in der ersten Kammer enthaltene Milch Kuhmilch oder Milch auf pflanzlicher Basis, bevorzugter pasteurisierte und/oder sterilisierte Kuhmilch oder Milch auf pflanzlicher Basis ist.

4. Behälter nach einem der vorstehenden Ansprüche, wobei die in der ersten Kammer enthaltene Milch einen Fettgehalt von mindestens 4 oder mindestens 5 Gew.-% in Bezug auf das Gewicht der Milch aufweist.

5. Behälter nach einem der vorstehenden Ansprüche, wobei die in der ersten Kammer enthaltene Milch höchstens 5, 4, 3, 2, 1 Gew.-%, oder vorzugsweise 0 Gew.-% Zusatzstoffe, die nicht natürlich in der Milch vorhanden sind, in Bezug auf das Gewicht der Milch umfasst.

6. Behälter nach einem der vorstehenden Ansprüche, wobei der Behälter eine Anzeige umfasst, die anzeigt, wann die in der ersten Kammer enthaltene Milch eine Temperatur von über 30 oder über 35 Grad Celsius aufweist.

7. Behälter nach einem der vorstehenden Ansprüche, wobei die in der ersten Kammer enthaltene Milch einen Eiweißgehalt von zwischen 1 ― 6 Gew.-%, vorzugsweise zwischen 2 ― 5 Gew.-% aufweist.

8. Behälter nach einem der vorstehenden Ansprüche, wobei das selbsterwärmende Element Folgendes umfasst
- eine Zusammensetzung, die fähig ist, nach Aktivierung des selbsterwärmenden Elements eine exotherme chemische Reaktion bereitzustellen, um die in der ersten Kammer enthaltene Milch zu erwärmen, wobei die Zusammensetzung vorzugsweise physisch von der in der ersten Kammer enthaltenen Milch gentrennt ist;
- eine Thermit-Reaktionszusammensetzung im festen Aggregatzustand, wobei vorzugsweise ein Aktivierungsmechanismus in Kommunikation mit der Thermit-Reaktionszusammensetzung im festen Aggregatzustand steht, um die in der ersten Kammer enthaltene Milch nach Betätigung des Aktivierungsmechanismus zu erwärmen, wobei die Thermit-Reaktionszusammensetzung im festen Aggregatzustand vorzugsweise physisch von der in der ersten Kammer enthaltenen Milch getrennt ist; und/oder
- eine Zusammensetzung, die Kalziumoxid, umfasst, wobei die Zusammensetzung, die Kalziumoxid umfasst, vorzugsweise nach Betätigung des Aktivierungsmechanismus mit Wasser vermischt wird, wobei die Zusammensetzung, die Kalziumoxid umfasst, vorzugsweise physisch von der in der ersten Kammer enthaltenen Milch getrennt ist.

9. Behälter nach einem der vorstehenden Ansprüche, wobei der Behälter aus einem Material hergestellt ist, das 25, 30, 40, 40, 50, 60, 70, 80 oder 90 Gew.-% Aluminium, Stahl oder eines anderen Metalls oder PET (Polyethylenterephthalat) oder eines anderen Kunststoffs in Bezug auf das Gewicht des Behälters umfasst.

10. Behälter nach einem der vorstehenden Ansprüche, wobei der Behälter aus einem Material hergestellt ist, das mindestens zu 25, 30, 40, 40, 50, 60, 70, 80 Gew.-% in Bezug auf das Gewicht des Behälters recyclebar ist.

11. Behälter nach einem der vorstehenden Ansprüche, wobei der Behälter eine Außenhülle umfasst, um die Benutzerhände thermisch von der aufschäumbaren Flüssigkeit zu isolieren.

12. Behälter nach einem der vorstehenden Ansprüche, wobei das druckbeaufschlagte Gas Luft, Stickstoff und/oder Kohlendioxid ist; und/oder wobei das druckbeaufschlagte Gas über atmosphärischen Druck hinaus, vorzugsweise über 2, 3, 4, 5, 6, 7, 8 9, oder 10 bar hinaus druckbeaufschlagt ist.

13. Behälter nach einem der vorstehenden Ansprüche, wobei der Behälter keine elektrisch betriebenen Komponenten umfasst, und/oder wobei der Behälter keine Komponenten umfasst, die ausgelegt sind, um mit einer externen Energie-, Elektrizitäts-, Warmwasser- und/oder Dampfquelle verbunden zu werden.

14. Verfahren zum Zubereiten eines erwärmten Produkts, das 40 ― 60 Vol.-% Milchschaum und 40 ― 60 Vol.-% mit Luft durchsetzte Milch umfasst, wobei das Verfahren Folgendes umfasst
(a) Bereitstellen eines Behälters, der Folgendes umfasst
eine erste Kammer, die Milch enthält, die einen Fettgehalt von zwischen 3 und 6 Gew.-% aufweist,
über 1 bar hinaus druckbeaufschlagtes Gas, das in der ersten Kammer oder in einer zweiten Kammer enthalten ist, wobei Freigeben des druckbeaufschlagten Gases an die erste Kammer zugelassen ist; und
ein Auslassventil, das in Flüssigkeitskommunikation mit der ersten Kammer steht,
wobei das Volumenverhältnis zwischen druckbeaufschlagtem Gas und Milch in dem Behälter zwischen 0,3:1 und 1:0,3 beträgt;
(b) Erwärmen der in der ersten Kammer enthaltenen Milch auf eine Temperatur von zwischen 58 und 70 Grad Celsius, vorzugsweise durch Kombinieren des Behälters mit einem externen Heizgerät, das in Wärmekontakt mit der Milch gebracht werden kann;
(c) Schütteln und/oder Bewegen des Behälters, vorzugsweise während des Erwärmens in Schritt (b), bis die Milch eine Temperatur von zwischen 25 ― 40, vorzugsweise zwischen 30 ― 35 Grad Celsius erreicht;
(d) Aktivieren und/oder Öffnen des Auslassventils, um das erwärmte Produkt zu erzeugen, das 40 ― 60 Vol.-% Milchschaum und 40 ― 60 Vol.-% mit Luft durchsetzte Milch umfasst, das darauffolgend optional zu Espresso, Kaffee oder heißer Schokolade beigegeben wird.

## Revendications

1. Récipient (3) pour distribuer un produit chauffé comprenant 40 à 60% en volume de mousse de lait et 40 à 60% en volume de lait aéré, le récipient comprenant une première chambre (4) contenant du lait ayant une teneur en matières grasses comprise entre 3 et 6% en poids ;
un élément auto-chauffant (5) qui est en contact thermique avec le lait et qui, lorsqu'il est activé, chauffe le lait à une température comprise entre 58 et 70 degrés Celsius ;
un gaz sous une pression supérieure à 1 bar qui est contenu dans la première chambre ou dans une seconde chambre permettant la libération du gaz sous pression vers la première chambre ; et
une soupape de sortie (1) qui est en communication liquide avec la première chambre,
dans lequel le rapport volumique entre le gaz sous pression et le lait dans le récipient est compris entre 0,3 : 1 et 1 : 0,3.

2. Récipient selon la revendication 1, dans lequel le produit chauffé comprenant 40 à 60% en volume de mousse de lait et 40 à 60% en volume de lait aéré est destiné à être ajouté à du café, en particulier à des produits de café cappuccino ou latte.

3. Récipient selon l'une quelconque des revendications précédentes, dans lequel le lait contenu dans la première chambre est un lait laitier ou un lait végétal, plus préférentiellement un lait laitier ou végétal pasteurisé et/ou stérilisé.

4. Récipient selon l'une quelconque des revendications précédentes, dans lequel le lait contenu dans la première chambre présente une teneur en matière grasse d'au moins 4, voire d'au moins 5% en poids par rapport au poids du lait.

5. Récipient selon l'une quelconque des revendications précédentes, dans lequel le lait contenu dans la première chambre comprend au plus 5, 4, 3, 2, 1% en poids, ou de préférence 0% en poids d'additifs qui ne sont pas naturellement présents dans ledit lait par rapport au poids du lait.

6. Récipient selon l'une quelconque des revendications précédentes, dans lequel le récipient comprend un indicateur qui indique lorsque le lait contenu dans la première chambre a une température supérieure à 30, ou supérieure à 35 degrés Celsius.

7. Récipient selon l'une quelconque des revendications précédentes, dans lequel le lait contenu dans la première chambre a une teneur en protéines comprise entre 1 à 6% en poids, de préférence entre 2 à 5% en poids.

8. Récipient selon l'une quelconque des revendications précédentes, dans lequel l'élément auto-chauffant comprend
- une composition qui est capable de fournir une réaction chimique exothermique lors de l'activation de l'élément auto-chauffant de manière à chauffer le lait contenu dans la première chambre, dans laquelle de préférence la composition est physiquement séparée du lait contenu dans la première chambre ;
- une composition de réaction de thermite à l'état solide, de préférence dans laquelle un mécanisme d'activation est en communication avec la composition de réaction de thermite à l'état solide de manière à chauffer le lait contenu dans la première chambre lors de l'actionnement du mécanisme d'activation, dans laquelle de préférence la composition de réaction de thermite à l'état solide est physiquement séparée du lait contenu dans la première chambre ; et/ou
- une composition comprenant de l'oxyde de calcium, de préférence dans laquelle la composition comprenant de l'oxyde de calcium est mélangée avec de l'eau lors de l'actionnement d'un mécanisme d'activation, dans laquelle de préférence la composition comprenant de l'oxyde de calcium est physiquement séparée du lait contenu dans la première chambre.

9. Récipient selon l'une quelconque des revendications précédentes, dans lequel le récipient est constitué d'un matériau comprenant au moins 25, 30, 40, 50, 60, 70, 80 ou 90% en poids d'aluminium, d'acier ou d'un autre métal, ou de PET (polyéthylène téréphtalate) ou d'un autre plastique, par rapport au poids du récipient.

10. Récipient selon l'une quelconque des revendications précédentes, dans lequel le récipient est constitué d'un matériau dont au moins 25, 30, 40, 50, 60, 70, 80% en poids est recyclable, par rapport au poids du récipient.

11. Récipient selon l'une quelconque des revendications précédentes, dans lequel le récipient comprend un manchon extérieur pour isoler thermiquement les mains de l'utilisateur du liquide moussant.

12. Récipient selon l'une quelconque des revendications précédentes, dans lequel le gaz sous pression est de l'air, de l'azote, et/ou du dioxyde de carbone ; et/ou dans lequel le gaz sous pression est pressurisé au-dessus de la pression atmosphérique, de préférence au-dessus de 2, 3, 4, 5, 6, 7, 8, 9, ou 10 bars.

13. Récipient selon l'une quelconque des revendications précédentes, dans lequel le récipient ne comprend pas de composants à commande électrique et/ou dans lequel le récipient ne comprend pas de composants configurés pour être connectés à une source externe d'énergie, d'électricité, d'eau chaude, et/ou de vapeur.

14. Procédé de préparation d'un produit chauffé comprenant 40 à 60% en volume de mousse de lait et 40 à 60% en volume de lait aéré, dans lequel le procédé comprend les étapes suivantes de
(a) fournir d'un récipient comprenant
une première chambre contenant du lait ayant une teneur en matières grasses comprise entre 3 et 6% en poids ;
un gaz sous une pression supérieure à 1 bar qui est contenu dans la première chambre ou dans une seconde chambre permettant la libération du gaz sous pression vers la première chambre ; et
une soupape de sortie qui est en communication liquide avec la première chambre,
dans lequel le rapport volumique entre le gaz sous pression et le lait dans le récipient est compris entre 0,3 : 1 et 1 : 0,3 ;
(b) chauffer le lait contenu dans la première chambre à une température comprise entre 58 et 70 degrés Celsius, de préférence en combinant le récipient avec un dispositif de chauffage externe qui peut être placé en contact thermique avec le lait ;
(c) secouer et/ou agiter ledit récipient, de préférence pendant le chauffage de l'étape (b) jusqu'à ce que le lait atteigne une température comprise entre 25 et 40, de préférence entre 30 et 35 degrés Celsius ;
(d) activer et/ou ouvrir la valve de sortie de manière à produire le produit chauffé comprenant 40 à 60% en volume de mousse de lait et 40 à 60% en volume de lait aéré qui est éventuellement ajouté ensuite à un espresso, un café ou un chocolat chaud.
